# EUROPEAN PATENT APPLICATION

(11) **EP 4 506 497 A1**
(43) Date of publication of application: **12.02.2025**
(21) Application number: 24192264.0
(22) Date of filing: 01.08.2024
(51) Int. Cl.: D04H 1/4274, B27N 1/02, B27N 3/02, B27N 3/10, B29B 17/00, D04H 1/587, D04H 1/732, E04B 1/74, E04B 1/88

(54) **INSULATING MATERIAL AND THE METHOD OF PRODUCING THE INSULATING MATERIAL**

(30) Priority: 08.08.2023 PL 44578523
(71) Applicant: Derdziuk, Zbigniew, 03-931 Warszawa (PL)
(72) Inventor:
(74) Representative: Markieta, Jaroslaw Franciszek

(57) **Abstract**

The subject of the application is an insulation material with a spatial structure formed from component materials containing a first fraction (**α**) and a second fraction (**β**), where the first fraction (**α**) consists of textile materials and the second fraction (**β**) consists of plastics selected from the group of polyolefins, **characterised in that** the materials of the first fraction (**α**) and the second fraction (**β**) take the form of two-dimensional flakes with similar bulk densities below 150 kg/m³, wherein the material of the first fraction (**α**) constitutes between 60% and 80% by weight, and the material of the second fraction (**β**) constitutes between 20% and 40% by weight, and the materials of both fractions are thermally bonded after being dry-mixed together. The subject of the application is also a method of manufacturing the insulation material.

## Description

This invention relates to an insulation material and a method for manufacturing the insulation material, particularly a thermal insulation material used for insulating and soundproofing building partitions.

The solution belongs to a group of spatially structured materials with insulating properties, characterised by microscopic pores or compartments filled with air or gas. These hollow spaces impede heat conduction, forming the basis of the insulating properties of these materials.

An insulation material in the form of a cellulose-thermoplastic mat and a method for manufacturing such a material are disclosed in publication US5418031A. The material disclosed in the US publication has a spatial structure comprising a mixture of cellulose material and a thermoplastic fibrous material, selected from the group consisting of polyethylene, polypropylene, and polyvinyl chloride. The mat is formed by mixing thermoplastic fibres, with a linear density ranging from 0.000111 g/m to 0.000666 g/m and a length of 2 to 15 cm, with a cellulose insulation material, typically produced from shredded wastepaper, so that the thermoplastic component constitutes 3% to 15% of the mass of the mixture. The surface of the mat is then subjected to thermal treatment to melt the thermoplastic component on the surface, forming a coating that keeps the cellulose component intact. As a result, the mat acquires elastic properties that make it easier to transport.

An insulation material with a spatial structure and a method for its production are disclosed in US5759680A. The material contains a discontinuous phase of cellulose fibres, surrounded and bonded by a continuous phase of a polymer component, preferably containing recycled polyethylene and optionally around 10 to 15 percent by weight of polypropylene. According to the disclosure in the US document, the cellulose fibres and polymer materials are preferably combined, mixed, and heated until the working temperature of the mixture reaches approximately 144.3°C to around 176.7°C or higher, depending on the type of polymer used. The mixture is then broken down into particles with a maximum size of approximately 3.8 cm and subsequently extruded, with the raw material's temperature maintained within the encapsulation temperature range. After exiting the extruder, the extrudate is passed through rollers until its temperature drops to approximately 60.0°C and its core temperature reaches around 82.2°C.

A method for producing a composite from thermoplastic polymers and lignocellulosic particles is disclosed in PL183478B1, where the raw material is formed into a heap and subjected to elevated temperature and pressure. The patent publikaction discloses that the heap is formed alternately from layers of cold pre-shredded thermoplastic material and layers of lignocellulosic particles. The total number of layers and the mass proportion of individual layers in the composite depend on the type, shape, and size of the particles, whether thermoplastic or lignocellulosic, as well as the desired properties of the composite. Preferably, the percentage of thermoplastics by mass in the composite ranges between 15% and 85%. Once the heap is formed, the lignocellulosic particles in the individual layers are plasticised. The formed heap is subjected to a temperature ranging from 100°C to 250°C. In the first phase, it is subjected to pressure for 2 to 3 minutes, ideally ranging from 0.25 MPa to 0.5 MPa. In the second phase, the pressure is increased to 0.25 MPa to 5 MPa and applied for 4 to 6 minutes. After the plasticised thermoplastic polymers penetrate the spaces between the lignocellulosic particles, including their pores and irregularities, the compressed composite is cooled using conventional methods.

A construction material created from a mixture of fibrous and binding fractions is disclosed in EP4125662A1, where the fibrous fraction is coated with an aqueous suspension of binding polymers in an aerodynamic process. The polymers in the aqueous suspension may be in the form of powder or flakes. The resulting composite can be moulded into spatial forms or panels with a thickness ranging from 3 mm to several centimetres after prior compression. Its density, which varies based on the polymer-to-fibre ratio (with the polymer comprising 2-30% by weight), ranges between 350 and 980 kg/m³. All the given examples of the composite have a density above 900 kg/m³. The Young's modulus indicates the material's load-bearing capability, as presented in the table. The composite production method indicates that the polymer is strongly bound to the fibres, and thus, the polymer's binding properties are achieved only after strong compression.

A longstanding issue within the field of producing thermal insulation materials with a low environmental impact is finding methods that reduce the carbon footprint of the production process. This is particularly problematic in the production of mineral wool, which requires production processes conducted at temperatures reaching 1600°C.

Another issue in the field is reducing waste from textile materials and plastics, particularly polyethylene and polypropylene. The significant costs of recovering these materials, compared to producing new materials from these groups, make their recovery economically unviable without subsidies involving public funds. This leads to unfair practices of exporting waste to developing countries, where it is either stored in landfills or burned in the open air, contributing to ecological disasters through the contamination of soil, water, and air.

The invention is an insulation material with a spatial structure composed of components containing a first fraction of textile materials and a second fraction of plastics selected from the polyolefin group. The material according to the invention is characterised by the first and second fraction materials being in the form of two-dimensional flakes with a similar bulk density below 150 kg/m³. The first fraction constitutes at least 60% of the volume, while the second fraction constitutes no more than 40%, and the materials of both fractions are thermally bonded.

The mixture of fractions according to the invention results in a homogeneous mass, free of local lumps of individual fractions. This positively influences the spatial structure of the final material, which is thermally bonded using the physical properties of plastics. At the phase transition temperature, the plastic begins to exhibit characteristics of a semi-liquid binder.

Preferably, the material according to the invention is characterised by the second fraction having a melting temperature in the range of 100 to 250°C.

Preferably, the material according to the invention is characterised by two-dimensional flakes that, when viewed from above, have a shape defined by a longitudinal and transverse axis, with the size of the flakes along both axes ranging from 5 mm to 30 mm.

Preferably, the material according to the invention is characterised by the first fraction being a textile material from the group comprising woven, unwoven, and knitted fabrics.

Preferably, the material according to the invention is characterised by the second fraction being a material selected from the group comprising polyethylene, polypropylene, and polystyrene.

Preferably, the material according to the invention is characterised by being provided with a reinforcing mesh layer.

Preferably, the material according to the invention is characterised by the reinforcing mesh being composed of materials selected from technical fibres: textiles; glass fibres; carbon fibres; aramid fibres; polyethylene fibres; polypropylene fibres; ceramic fibres; polymer composites; steel; and aluminium.

Preferably, the material according to the invention is characterised by a reinforcing mesh that is thermally bonded to the mixture of the first and second fractions.

Moreover, the essence of the invention is a method for producing the insulation material, involving the mixing of the shredded first component fraction and the second component fraction, where the first fraction comprises textile materials and the second fraction comprises plastics selected from the polyolefin group. The method according to the invention is characterised in that the materials of the first and second fractions, which take the form of two-dimensional flakes with a similar bulk density below 150 kg/m³, are mixed together, with the material of the first fraction constituting at least 60% of the volume and the material of the second fraction constituting no more than 40% of the volume, and then the mixed first and second fractions are subjected to thermal treatment by heating it to a temperature below 250°C to achieve partial melting of the second fraction of component materials.

Preferably, the method according to the invention is characterised by cooling the mixed components under a pressure not exceeding 2 KPa after they have been heated to a temperature below 250°C.

Preferably, the method according to the invention is characterised by laying the mixed components on a reinforcing mesh before subjecting it to thermal treatment.

Preferably, the method according to the invention is characterised by covering the mixed components with a reinforcing mesh before subjecting it to thermal treatment.

The advantage of the invention is introducing environmentally friendly insulation material, offering both thermal and acoustic insulation which contributes to reducing the carbon footprint and enables the recycling of materials such as woven, unwoven, and knitted fabrics, as well as plastics like polyethylene and polypropylene. In particular, the invention facilitates the disposal of thin polymer films, such as single-use plastic bags, commonly found in landfills. The invention advantageously reduces the carbon footprint associated with producing thermal insulation materials, especially when compared with mineral wool production technology. This is achieved by the lower energy consumption of the production process, which operates at temperatures up to 250°C compared to 1600°C for mineral wool, significantly reducing its environmental impact. The material has a good thermal conductivity coefficient A ranging from 0.045 to 0.049, while maintaining low diffusion resistance (high vapour permeability).

The advantageous embodiment of the invention is detailed in the following figures:
- Fig. 1: shows a cross-section of the material layer in a preferred embodiment of the invention;
- Fig. 2: shows a schematic representation of the production device used to implement the method of producing the insulation material according to the invention.

The terms used in the description of the preferred embodiments of the invention and in the claims are defined below. Two-dimensional flakes are structures in which one geometric dimension is significantly smaller than the other two; for example, the flakes preferably have dimensions of 30 mm × 30 mm × 0.02 mm.

Additionally, materials are considered to have similar bulk densities if their absolute difference does not exceed 50%.

The insulation material according to the invention has a spatial structure formed from components containing a first fraction **α** and a second fraction β. The first fraction **α** consists of textile materials, while the second fraction β consists of plastics selected from the polyolefin group.

The first fraction **α** is preferably a textile material from the group comprising woven, unwoven, and knitted fabrics. Recycled textile materials are particularly preferred. The first fraction **α** does not need to be homogeneous in composition and may consist of a mixture of shredded production waste or materials from the selective collection of municipal waste.

The second fraction **β** is selected from the group comprising polyethylene, polypropylene, and polystyrene. The material of the second fraction **β** also does not need to be homogeneous and may consist of mixtures of different materials from the polyolefin group, in various proportions and with different melting temperatures. This is because these materials have similar melting points, around 250°C, and differences in phase transition temperatures favourably contribute to forming the amorphous network structure of the resulting material. Moreover, the relatively short heating time prevents the material of the second fraction **β** from fully liquefying.

In a preferred embodiment of the invention, the material of the first fraction **α** and the material of the second fraction **β** are in the form of two-dimensional flakes with a similar bulk density below 150 kg/m³. Preferably, the two-dimensional flakes, when viewed from above, have a shape defined by a longitudinal axis x and a transverse axis y, with the size of the flakes along each axis ranging from 5 mm to 30 mm. Additionally, the similar bulk densities below 150 kg/m³ ensure that material fractions **α** and **β** mix uniformly, resulting in a generally homogeneous mixture of the components. Homogeneity of the mixture means that there are no local concentrations of the first fraction **α** and the second fraction **β** within the mixed mass of components.

The material of the first fraction **α** constitutes between 60% and 80% by weight, while the material of the second fraction **β** constitutes between 20% and 40% by weight. Since the bulk densities of both fractions are similar, the proportion of the fraction mixture expressed in % by volume is proportional to the % by weight, ensuring that both values maintain the same ratio of fractions in the mixture.

The process of mixing the first fraction **α** and the second fraction **β** occurs dry, in an air atmosphere, at a temperature above the dew point. Preferably, mixing is mechanical, but it can also be an aerodynamic process using an air blast. Dry mixing indicates that no additional liquid agents are used.

According to the invention, the materials of both fractions are thermally bonded by partially melting the material of the second fraction **β.** Preferably, the material of the second fraction **β** has a melting point in the range of 100 to 250°C.

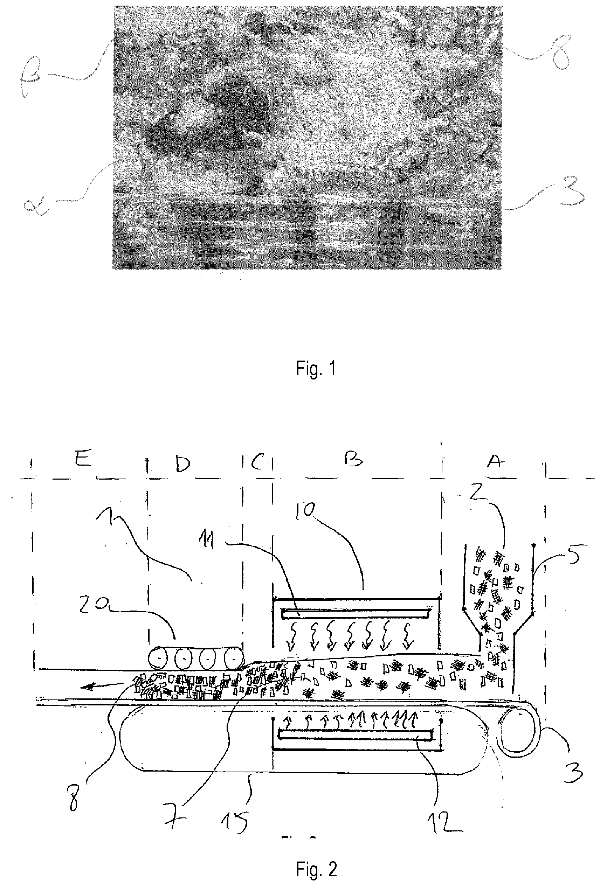

Fig. 1 shows a side view of the material **8** according to the invention. The mixture of components, i.e., the first fraction **α** and the second fraction **β,** is visible, thermally bonded by melting the material of the second fraction **β**. The thermal bonding achieved by melting the material of the second fraction (**β**) also binds the mixture of components to the reinforcing mesh **3.** In alternative embodiments, the reinforcing mesh **3** can be bonded to the formed material **8** according to the invention using other methods, such as adhesive bonding or mechanical fastening with hooks. The resulting material **8** forms a mat suitable for use in construction as thermal insulation or soundproofing. Thanks to its porous amorphous spatial structure and the properties of the fibrous fraction **α**, the resulting material is vapour-permeable while maintaining thermal and sound insulation properties.

### Example formulations of the composite

Several compositions, representing possible embodiments of the invention, have been analysed. The percentage composition of the individual fractions and the parameters of the finished material are shown in the table below.

| Ite m | Content of fraction α [%] | Content of Fraction β [%] | Composite density [kg/m³] | λ [W/mK] | Water absorption [%] |
|---|---|---|---|---|---|
| 1 | 80 | 20 | 135 | 0.0415 | 32 |
| 2 | 75 | 25 | 145 | 0.0420 | 30 |
| 3 | 60 | 40 | 155 | 0.0425 | 28 |

Favourable technical effects were observed within the fibre fraction content range of 60% to 80% by weight and the second fraction β from 40% to 20% by weight, which contribute to the material's cohesion and mechanical properties.

Within the studied range, favourable parameters regarding thermal insulation properties were achieved.

Properties outside the scope of the invention were also analysed, revealing that when the fibre fraction α exceeds 80%, and the second fraction β drops below 20% by weight, the material's cohesion deteriorates, leading to excessive brittleness, susceptibility to fragmentation, and increased water absorption. Conversely, when the fibre fraction α fell below 60%, and the second fraction β exceeded 40% by weight, an unfavourable decline in insulation properties was observed.

A comparative analysis with known insulation materials suggests that the sound absorption coefficient for the material according to the invention is expected to range between 51 and 53 dB on a flat surface facing the sound source.

Fig. 2 shows a schematic representation of the production device 1 used in the method for producing the insulation material according to the invention. The device features successive zones **A, B, C, D,** and **E.** It consists of a hopper that holds the pre-mixed mixture **2** of the first and second fractions of the component materials. The hopper **5** is located in zone A. The mixed component materials are discharged from hopper **5** onto a reinforcing mesh **3** unwound from a roll.

The reinforcing mesh **3** is preferably made from a material selected from the group including technical fibres, textiles, glass fibres, carbon fibres, aramid fibres, polyethylene fibres, polypropylene fibres, ceramic fibres, polymer composites, and even metals like steel or aluminium. The material of the mesh positively influences the mechanical properties of the mat formed from the material according to the invention.

In other embodiments, the reinforcing mesh can be omitted; in such cases, the mixture of component materials is discharged onto a conveyor belt **15.** In other alternative embodiments, the mass formed from the mixture of component materials and shaped on the conveyor may be covered with a reinforcing mesh from above (not shown); in such an embodiment, an alternative or additional feeder is located in zone **A,** above the conveyor **15,** between the hopper **5** and the heating oven **10.**

After being shaped on the conveyor **15,** the mixture of component materials is transported to the heating oven **10,** located in zone **B** of the device 1. The oven **10** is equipped with an upper heater **11** and a lower heater **12,** preferably resistance heaters. Alternatively, in other embodiments, different heat sources may be used, such as induction heaters, gas burners, heat exchangers with superheated steam, etc. In the heating oven **10,** the material of the second fraction **β** is heated to a temperature close to its melting point. Preferably, the mixture of the material of the first fraction **α** and the second fraction **β** is kept at a temperature below 250°C for less than 5 minutes. The specific temperatures inside the heating oven **10** and the heating time can be adjusted based on the composition of the component material mixture. It is crucial to achieve partial melting of the material of the second fraction **β** without fully liquefying it. This is because the liquefied material of the second fraction **β** begins to flow under gravity, negatively affecting the uniformity of the material. The melted second fraction starts to settle at the bottom of the formed layer, while the material of the first fraction accumulates in the upper layer, leading to undesirable separation of the fractions.

As the heating time progresses and the layer of the component material mixture moves through the oven **10,** an amorphous network structure gradually forms. The second fraction begins to exhibit binding properties and loses its original rigidity, leading to the natural densification of the material into a preliminarily compacted form **7.**

The natural densification of the material continues after it exits the oven **10,** i.e. in zone **C** of the device. In the next zone **D** of the device, cooling proceeds under pressure exerted by a pressing unit **20,** which may consist of a pressing band mounted on pressure rollers. Other embodiments may include a single pressure roller or a surface press, etc. The pressure does not necessarily have to be applied perpendicular to the conveyor **15,** as shown in Fig. 2. The pressing unit **20** may be inclined and gradually increase the pressure on the cooling mass of mixed component materials. The pressing force and duration are selected based on the physical properties of the materials of the first fraction **α** and the second fraction **β.** Preferably, the pressing force does not exceed 2 KPa, and the pressing time does not exceed 2 minutes. After exiting the pressing unit **20,** the resulting material **8** achieves the target density, preferably in the range of 100 to 200 kg/m³. It is then further cooled in zone **E** and subsequently subjected to additional production processes typical of insulation materials.

In an alternative embodiment, there is no pressing unit **20,** and natural densification occurs under gravity. This approach helps retain a large volume of the resulting insulation material, trapping significant amounts of air between the components, which positively affects the insulating properties but negatively impacts the mechanical properties. Therefore, the optional introduction of reinforcing meshes improves the mechanical properties of the insulation material.

Alternatively, the device may be equipped with two hoppers and a mixer for the preliminary mixing of the first fraction **α** and the second fraction **β.**

## Claims

1. An insulation material with a spatial structure formed from components containing a first fraction (**α**) and a second fraction (**β**), where the first fraction consists of textile materials and the second fraction consists of plastics selected from the polyolefin group, **characterised in that**
the materials of the first fraction (**α**) and the second fraction (β) are in the form of two-dimensional flakes with a similar bulk density below 150 kg/m³m, wherein
the material of the first fraction (**α**) constitutes between 60% and 80% by weight, while the material of the second fraction (**β**) constitutes between 20% and 40% by weight, and
the materials of both fractions are thermally bonded by the partial melting of the material of the second fraction (**β**) after they have been dry-mixed together.

2. The material according to claim 1 wherein the material of the second fraction (**β**) has a melting temperature in the range of 100 to 250°C.

3. Material according to claim 1 or 2 wherein the two-dimensional flakes, when viewed from above, have a shape defined by a longitudinal axis (x) and a transverse axis (y), with the size of the flakes along each axis ranging from 5 mm to 30 mm.

4. The material according to any of claims 1 to 3 wherein the material of the first fraction (**α**) is a textile material of the group consisting of woven, unwoven, knitted fabrics.

5. The material according to any of claims 1 to 4 wherein the material of the second fraction (**β**) is a material selected from the group consisting of polyethylene, polypropylene, polystyrene.

6. Material according to any of claims 1 to 5 wherein it is provided with a reinforcing mesh layer **(3).**

7. Material according to claim 6, wherein the reinforcing mesh **(3)** is made of a material selected from the group comprising technical fibres, textiles, glass fibres, carbon fibres, aramid fibres, polyethylene fibres, polypropylene fibres, ceramic fibres, polymer composites, steel and aluminium.

8. Material according to claim 6 or 7 wherein the reinforcing mesh **(3)** is bonded to a mixture of first fraction (**α**) and second fraction (**β**) materials thermally by partial melting of the material of the second fraction **(β).**

9. A method of manufacturing the insulation material, involving:
dry mixing the shredded first fraction (**α**) component and the second fraction **(β)** component, where the first fraction (**α**) consists of textile materials and the second fraction **(β)** consists of plastics selected from the group of polyolefins **characterised in that**
the materials of the first fraction (**α**) and the second fraction **(β),** which take the form of two-dimensional flakes with similar bulk densities below 150 kg/m³, are mixed together, wherein the material of the first fraction (**α**) constitutes between 60% and 80% by weight, while the material of the second fraction **(β)** constitutes between 20% and 40% by weight,
the mixed first fraction (**α**) and second fraction (**β**) are then subjected to thermal treatment by heating the mixture of component materials to a temperature below 250°C to achieve partial melting of the second fraction (**β**) of the component materials.

10. The method according to claim 9 wherein after heating the mixture of components to a temperature below 250°C, the mixture is cooled under a pressure not exceeding 2 KPa.

11. The method according to claim 9 or 10 wherein before subjecting the mixture of components to thermal treatment, the mixture is laid on a reinforcing mesh **(3).**

12. The method according to any one of claims 9 to 11 wherein before subjecting the mixture of component materials to thermal treatment, the mixture is covered with a reinforcing mesh (3).
